# EUROPÄISCHE PATENTSCHRIFT

(11) **EP 3 374 265 B1**
(45) Veröffentlichungstag und Bekanntmachung des Hinweises auf die Patenterteilung: **16.09.2020**
(21) Anmeldenummer: 16795008.8
(22) Anmeldetag: 10.11.2016
(51) Int. Cl.: B64D 11/06

(54) **BEFESTIGUNGSEINRICHTUNG FÜR EIN IN SCHIENEN EINER BODENSTRUKTUR EINES FLUGZEUGINNENRAUMES ZU BEFESTIGENDES BAUTEIL**
FIXING DEVICE FOR A COMPONENT PART MOUNTABLE IN RAILS OF A FLOOR STRUCTURE OF AN AIRCRAFT
DISPOSITIF DE FIXATION POUR UNE PARTIE COMPOSANT À FIXER DANS UNE RAIL DANS UNE STRUCTURE DE PLANCHER D'UN AVION

(30) Priorität: 11.11.2015 DE 102015222233; 25.05.2016 CH 6712016
(43) Veröffentlichungstag der Anmeldung: 19.09.2018
(73) Patentinhaber: Lufthansa Technik AG, 22335 Hamburg (DE)
(72) Erfinder: LOOSE, Jörn, 22083 Hamburg (DE); GAMM, Mario, 21465 Reinbek (DE); KUHLGATZ, Wolfram, 24616 Hardebek (DE); KÖHLER, Stefan, 25335 Elmshorn (DE); PIOTROWSKI, Pawel, 12043 Berlin (DE); SCHMITZ, Magdalena, 22399 Hamburg (DE)
(74) Vertreter: Müller Verweyen
(86) Internationale Anmeldenummer: PCT/EP2016/077218
(87) Internationale Veröffentlichungsnummer: WO 2017/081128

(56) Entgegenhaltungen:
- WO-A1-2013/174518
- US-A- 5 904 407
- US-A1- 2007 080 258
- US-A1- 2010 314 494
- US-A1- 2015 108 273

## Beschreibung

Die Erfindung betrifft eine Befestigungseinrichtung für ein in Schienen einer Bodenstruktur eines Flugzeuginnenraumes zu befestigendes Bauteil.

Solche Bauteile können z.B. Flugzeugsitze sein, welche in den Schienen eines Schienensystems befestigt sind, welche ihrerseits an der Bodenstruktur eines Flugzeuginnenraumes angeordnet sind.

Für eine sichere Verwendung eines Flugzeugsitzes im Luftverkehrsbetrieb werden durch die entsprechenden Behörden verschiedene luftfahrtrechtliche Anforderungen formuliert, deren Einhaltung die Sicherheit des Passagiers auf dem Flugzeugsitz in verschiedenen Situationen bzw. möglichen Unfallszenarien sicherstellen sollen.

Für einen Crashfall besteht die Anforderung, dass die dynamische Insassenbelastung eines auf dem Flugzeugsitz sitzenden Passagiers unter definierten Bedingungen bestimmte Grenzwerte nicht überschreitet. Hierfür ist es notwendig, dass der Flugzeugsitz eine Möglichkeit bietet, die auf den Passagier einwirkenden Kräfte durch eine Aufnahme kinetischer Energie zu begrenzen. Der Sitzunterbau der üblichen Flugzeugsitze weist daher eine metallische Struktur auf, die sich im Crashfall plastisch verformt, dementsprechend kinetische Energie absorbiert und so die auf den Passagier einwirkenden Kräfte begrenzt.

Die plastische Verformung erfolgt dabei über den ganzen Sitzunterbau verteilt. Das bedeutet, dass die mechanischen Strukturen, die die Last tragen, verformt werden und so die auf den Passagier einwirkenden Kräfte begrenzen. Die Verformung führt auch zu einer geänderten Geometrie und Kraftführung, was bei der Auslegung des Flugzeugsitzes durch entsprechende Festigkeitsreserven berücksichtigt werden muss. Dies wirkt sich nachteilig auf das Gewicht des Flugzeugsitzes aus.

Die Deformation führt im translatorischen Crashfall unter anderem zu einer Rotationsbewegung eines Großteils des Sitzes um einen virtuellen Drehpunkt in der Nähe des Kabinenbodens. Dies führt im oberen Bereich des Sitzes aufgrund der Lage des sich ergebenden virtuellen Drehpunkts zu einer deutlichen translatorischen Verschiebung im oberen Bereich des Sitzes, die zusätzlich zur translatorischen Verschiebung, die zur Energieaufnahme benötigt wird, auftritt. Dies führt somit zu einer großen Bewegungsenveloppe in einem Crashfall für den Flugzeugsitz und folglich auch für den Sitzenden, die als Bewegungsraum von weiteren Einbauten freigehalten werden muss.

Eine Verwendung einer einfachen Versteifung der Struktur für den Sitzunterbau, um eine Rotation bei translatorischen Crashfällen zu reduzieren, steht der sicherheitstechnischen Anforderung zur Kraftbegrenzung für den Passagier entgegen.

Insbesondere gehört zu den behördlichen Anforderungen für Flugzeugsitze, dass in einem Crashfall eine Vordeformation des Flugzeugbodens anzunehmen ist, die vom Sitzunterbau aufgenommen bzw. ertragen werden muss. Die Sitzunterbauten müssen daher eine mechanische Nachgiebigkeit gerade im unteren Bereich aufweisen, um den Auslenkungen in der Flugzeugbodenstruktur folgen zu können. Dies steht im Widerspruch zu einer geringen Rotationsbewegung des Flugzeugsitzes und zur gewünschten kleinen Bewegungsenveloppe. Sitzunterbauten mit steifen Strukturen, die aber nur eine geringe Verformung zulassen, sind daher mit der im Stand der Technik bekannten Lösung nicht realisierbar.

Weiterhin erfolgt durch die Vordeformation der Bodenstruktur eine Verformung des Sitzunterbaus mit großen Dehnungen und einer veränderten Geometrie, was zu einer Schwächung des Sitzunterbaus führt, wobei der eigentliche Crashfall mit hohen dynamischen Lasten erst anschließend auftritt.

In der WO 2013/174518 A1 wurde bereits eine Bodenanbindungsbaugruppe als Befestigungseinrichtung vorgeschlagen, welche zur mechanischen Anbindung eines Flugzeugsitzes in den Schienen einer Bodenstruktur eines Flugzeuges mindestens drei Befestigungspunkte aufweist, wobei die Bodenanbindungsbaugruppe an mindestens drei Befestigungspunkten mit jeweils einem Befestigungselement an der Bodenstruktur befestigbar ist. Ferner umfasst die Bodenanbindungsbaugruppe eine Adapterplatte mit einer mechanischen Verbindung zwischen der Adapterplatte und den Befestigungselementen, welche um mindestens eine Achse im Wesentlichen momentenfrei gelagert ist.

Die US 2015/0108273 A1 beschreibt ein modulares Befestigungssystem für ein in Schienen einer Bodenstruktur eines Flugzeuginnenraums befestigbares Bauteil, wobei wenigstens zwei voneinander entkoppelte, in den Schienen befestigbare Adapterplatten 24 vorgesehen sind, auf denen das Bauteil mit voneinander beabstandeten Befestigungssätzen befestigbar ist.

Die US 2007/0080258 A1 wird eine Bodenanbindungsbaugruppe vorgeschlagen, die als Langlöcher geformte Befestigungsaufnahmen aufweist und dadurch verschiebbar auf Befestigungsschienen mit unterschiedlichen Abständen anpassbar ist.

Die verwendete Adapterplatte hat ferner den Vorteil, dass die Flugzeugsitze oder die Bauteile im Allgemeinen unabhängig von dem Verlauf und der Anordnung der Schienen in dem Flugzeuginnenraum positioniert werden können, so dass das Flugzeug entsprechend mit einer individuellen Anordnung der Flugzeugsitze und Bauteile in dem Flugzeuginnenraum ausgestattet werden kann. Ferner kann durch die vorgeschlagene Lagerung der Adapterplatte verhindert werden, dass Deformationen der Bodenstruktur bis zu einem gewissen Grad auf die Adapterplatte und das Bauteil übertragen werden.

Ferner entsteht beim Auf- und Absteigen eines Flugzeuges ein Differenzdruck zwischen dem Flugzeuginnenraum und der Umgebung, welcher zu einer lateralen Ausdehnung des Flugzeugrumpfes quer zu den in Längsrichtung des Flugzeugrumpfes verlaufenden Schienen und einer anschließenden Kontraktion desselben führt. Diese Dehnungen führen aufgrund der über das Adapterteil der Bodenanbindungsbaugruppe an der Bodenstruktur befestigten Bauteile zu Zwangskräften in der Bodenstruktur, welche wiederum bei einer Vielzahl von Auf- und Abstiegen zu einer Materialermüdung der Bodenstruktur, der Schienen und auch der Adapterplatte führen können, wodurch wiederum die statische Tragfähigkeit der Bauteile reduziert wird.

Vor diesem Hintergrund liegt der Erfindung die Aufgabe zugrunde, eine Befestigungseinrichtung für ein in Schienen einer Bodenstruktur eines Flugzeuges befestigbares Bauteil bereitzustellen, mit der die oben beschriebenen Zwangskräfte und die dadurch bedingte Schadenswahrscheinlichkeit bei auftretenden Verformungen verringert werden können.

Zur Lösung der Aufgabe wird erfindungsgemäß eine Befestigungseinrichtung mit den Merkmalen des Anspruchs 1 vorgeschlagen. Weitere bevorzugte Weiterentwicklungen sind den Unteransprüchen, den Figuren und der zugehörigen Beschreibung zu entnehmen.

Gemäß dem Grundgedanken der Erfindung wird vorgeschlagen, dass die Befestigungseinrichtung wenigstens zwei voneinander entkoppelte, in den Schienen befestigbare Adapterplatten aufweist, auf denen das Bauteil mit voneinander beabstandeten Befestigungsansätzen befestigbar ist.

Der Vorteil der vorgeschlagenen Lösung ist darin zu sehen, dass die Befestigung des Bauteils dadurch von der Bodenstruktur entkoppelt wird. Die Bodenstruktur des Flugzeuges wird aufgrund der wenigstens zwei verwendeten Adapterplatten zu einem erheblich geringeren Grad versteift, als dies bei den im Stand der Technik bekannten Lösungen mit der Verwendung einer einzigen Adapterplatte der Fall ist, so dass die aufgrund der nicht zu vermeidenden Verformungen des Flugzeugbodens entstehenden Zwangskräfte sowohl in der Bodenstruktur als auch in der Befestigungseinrichtung und in dem zu befestigenden Bauteil wesentlich verringert werden können. Dabei können die wenigstens zwei Adapterplatten, die Lagerpunkte der Adapterplatten in den Schienen und schließlich auch die Anordnung der Befestigungsansätze des Bauteils auf den Adapterplatten so gewählt und positioniert werden, dass entsprechende Hauptverformungsrichtungen besonders berücksichtigt werden. Dadurch können die maximalen Zwangskräfte und die maximalen dadurch bewirkten Bauteilspannungen in der Bodenstruktur, in den Adapterplatten und in dem Bauteil selbst besonders effektiv reduziert werden. Ferner können besonders große Bauteile, wie z.B. auch Möbelstücke, besonders einfach und mit einer sehr großen Stabilität in den Schienen der Bodenstruktur befestigt werden, indem die Abstände der Adapterplatten und der Befestigungsansätze an dem Bauteil entsprechend groß gewählt werden. Dabei ist es von besonderem Vorteil, dass dazu identische Adapterplatten unabhängig von der Form und der Größe der Bauteile verwendet werden können. Dabei kann die individuelle Ausrichtung und Position des Bauteils in dem Flugzeuginnenraum durch die individuelle Formgebung, Ausrichtung und Befestigung der Adapterteile in den Schienen erzielt werden.

Erfindungsgemäß wird vorgeschlagen, dass jede der Adapterplatten an zwei verschiedenen Schienen befestigt ist, wobei die Adapterplatten jeweils an einer der Schienen in jeweils einem ersten Lagerpunkt und in der anderen Schiene in zwei zweiten Lagerpunkten gelagert sind. Die Adapterplatten werden dadurch in drei Lagerpunkten in den Schienen gehalten, wodurch eine kippsichere Befestigung der Adapterplatten in den Schienen verwirklicht werden kann. Da die drei Lagerpunkte unabhängig von ihrer Lage immer eine Ebene aufspannen, können die Adapterplatten dabei insbesondere auch bei auftretenden Verformungen der Schienen mit möglichst geringen Zwangskräften in den Lagerpunkten gehalten werden.

Dabei wird erfindungsgemäß eine besonders gute Lagerung mit möglichst geringen Zwangskräften bei auftretenden Verformungen verwirklicht, indem die Adapterplatten in den ersten Lagerpunkten verschiebbar gegenüber den Schienen gelagert sind. Durch diese bewusst geschaffenen Loslager kann eine laterale Aussteifung der Bodenstruktur vermieden werden. Dabei sind bewusst die Lagerstellen, in denen die Adapterplatten mit nur einer Lagerstelle gehalten sind, verschiebbar ausgeführt, wodurch die Verschiebbarkeit besonders einfach und mit geringem Aufwand verwirklicht werden kann. Dabei ist die Verschiebbarkeit in der Lagerstelle bevorzugt quer zu der jeweiligen Schiene vorgesehen. Da die Schienen in Längsrichtung des Flugzeugrumpfes verlaufen, wird dadurch ein Freiheitsgrad geschaffen, durch welchen die geringfügige radiale Ausdehnung des Flugzeugrumpfes während des Aufsteigens des Flugzeuges aufgrund des steigenden Differenzdruckes kompensiert werden kann. Dadurch können die Schienen bei einer Verformung der Bodenstruktur geringfügige Bewegungen zueinander ausführen, ohne dass dabei Zwangskräfte in den Adapterplatten oder der Bodenstruktur erzeugt werden.

Weiter wird vorgeschlagen, dass wenigstens eine der Seitenflächen der Adapterplatte derart konturiert ist, dass wenigstens zwei zur Befestigung unterschiedlicher Bauteile vorgesehene Adapterplatten angrenzend zueinander auf einer gemeinsamen Schiene angeordnet werden können. Durch die vorgeschlagene Lösung können die Adapterplatten benachbarter Bauteile möglichst bauraumsparend angeordnet werden.

Dabei wird gemäß einer weiteren bevorzugten Weiterentwicklung vorgeschlagen, dass die Seitenfläche einer der beiden Adapterplatten die Negativfläche der gegenüberliegenden Seitenfläche der jeweils angrenzend angeordneten Adapterplatte ist, und die beiden Adapterplatten mit den gegenüberliegenden Seitenflächen ineinander greifen. Durch die vorgeschlagene Lösung können die Adapterplatten der verschiedenen Bauteile mit einer formschlüssigen Überlappung der Seitenflächen besonders raumsparend angeordnet werden. Dabei können zwischen den Seitenflächen bewusst Spalte vorgesehen werden, indem z.B. ein Vorsprung an einer der Seitenflächen einer Adapterplatte kleiner als ein Rücksprung oder versetzt zu einem Rücksprung einer jeweils angrenzenden Seitenfläche einer anderen Adapterplatte ist, so dass die Adapterplatten geringfügige Bewegungen zueinander ausführen können und sich nicht bei auftretenden Verformungen gegeneinander verspannen.

Dabei wird gemäß einer weiteren bevorzugten Weiterentwicklung vorgeschlagen, dass die zwei zweiten Lagerpunkte einer ersten Adapterplatte auf fingerförmigen beabstandeten Fortsätzen angeordnet sind, und eine jeweils zweite Adapterplatte einen auf einem einzelnen fingerförmigen Fortsatz angeordneten ersten Lagerpunkt aufweist, wobei der erste Lagerpunkt auf dem einzelnen fingerförmigen Fortsatz zwischen den Fortsätzen der zweiten Lagerpunkten der ersten Adapterplatte in derselben Schiene gehalten ist. Die beiden Adapterplatten greifen praktisch nach Art einer Verzahnung ineinander, wobei der verschiebliche Lagerpunkt der zweiten Adapterplatte zwischen den beiden festen Lagerpunkten der ersten Adapterplatte angeordnet ist. Neben der besonders raumsparenden Anordnung wird dadurch außerdem ein Anschlag zur Begrenzung einer möglichen Bewegung der Adapterplatten zueinander geschaffen. Im Idealfall sind die Adapterplatten identisch ausgebildet und greifen mit dem Fortsatz, an dem das Loslager angeordnet ist, zwischen die beiden Fortsätze, in denen die Adapterplatten in Festlagern an den Schienen gehalten sind. Dadurch kann eine besonders raumsparende Reihenanordnung von einer Mehrzahl von Adapterplatten mit darauf gehaltenen Bauteilen verwirklicht werden.

In der Verbindung zwischen den Adapterteilen und den Schienen sind jeweils Kugelgelenke vorgesehen. Durch die Kugelgelenke werden bewusst Freiheitsgrade in Form von Drehbeweglichkeiten in die Verbindungen zwischen den Bauteilen und den Schienen und bevorzugt in die Verbindungen zwischen den Adapterteilen und den Schienen eingebracht, so dass das Bauteil und bevorzugt die Adapterteile gewisse Schwenkbewegungen gegenüber den Schienen und der Bodenstruktur und umgekehrt ausführen können, ohne dass dabei Zwangskräfte in den Bauteilen, den Adapterplatten oder der Bodenstruktur erzeugt werden. Diese Drehbeweglichkeiten ermöglichen insbesondere geringfügige Drehbewegungen der Schienen um ihre Längsachsen mit nur sehr geringen oder keinen Zwangskräften und Spannungen in der Bodenstruktur, den Schienen, den Adapterplatten und dem Bauteil selbst. Durch die Kombination der Loslager mit den Drehbeweglichkeiten können neben den Dehnungen der Bodenstruktur zusätzlich auch Torsionen derselben in bestimmten Grenzen kompensiert werden.

Dabei können die Lagerstellen trotz der Schwenkbeweglichkeit ausreichend fest gestaltet werden, indem die Kugelgelenke jeweils durch eine formstabile Kugel und eine formstabile Kugelschale gebildet sind, welche so fest und steif ausgeführt sind, dass sie die Kräfte ohne mechanische Beschädigungen und Verformungen übertragen können. Damit diese entsprechend formstabil ausgebildeten Lagerteile montagefreundlich zusammengefügt werden können, ist die Kugelschale jeweils durch zwei formstabile Kugelhalbschalen gebildet. Durch die vorgeschlagene Lösung kann das durch die formstabilen Teile gebildete Kugelgelenk montagefreundlich zusammengesetzt werden, indem die Kugel zuerst in eine der formstabilen Kugelhalbschalen eingelegt und anschließend die andere Kugelhalbschale zur Vervollständigung der Kugelschale angesetzt wird. Dabei muss keines der formstabilen Lagerteile verformt werden, so dass diese mechanisch entsprechend der aufzunehmenden Lagerkräfte ausgelegt werden können, ohne dass dabei auf die Montage Rücksicht genommen werden muss. Die Kugelhalbschalen sind dabei bevorzugt so bemessen, dass sich die Halbschalen ausgehend von der Einführöffnung ausschließlich verengen, so dass die Kugelhalbschalen in der montierten Stellung immer nur maximal die Hälfte der Kugel umfassen.

Dabei sind die Kugeln der Kugelgelenke den Schienen und die Kugelschalen den Adapterplatten zugeordnet. Ferner sind die beiden Kugelhalbschalen eines Kugelgelenkes jeweils an einer Halteplatte angeordnet, welche sich in einer zusammengesetzten Montagestellung zu der Kugelschale ergänzen und wenigstens einen Befestigungsansatz aufweisen. Die beiden Halteplatten bilden damit durch das Zusammensetzen die Kugelschale, wobei die Befestigungsansätze zur Verbindung der beiden Halteplatten dienen.

Dabei kann das Loslager des ersten Lagerpunktes besonders einfach dadurch verwirklicht werden, indem die beiden Halteplatten in der zusammengesetzten Montagestellung durch eine Nut-und Federverbindung mit jeweils einer Adapterplatte verbunden sind, wobei die Nut- und Federverbindung quer, vorzugsweise senkrecht, zu den Schienen ausgerichtet ist, an denen die jeweilige Adapterplatte mit dem ersten Lagerpunkt befestigt ist. Durch die Nut- und Federverbindung wird eine Führung der Adapterplatte in dem Loslager in Richtung der lateralen Bewegungsfreiheit gegenüber den beiden Halteplatten verwirklicht. Ferner kann die Nut- und Federverbindung auch bewusst als eine reibschlüssige Verbindung ausgelegt werden, welche erst bei einem Überschreiten einer durch die Auslegung vorbestimmten Querkraft aufgehoben wird. Dadurch kann die Adapterplatte erst bei dem Überschreiten einer vorbestimmten Querkraft seitlich gegenüber der Schiene verschoben werden, so dass die möglichen in die Bodenstruktur und umgekehrt in die Adapterplatte eingeleiteten Zwangskräfte und Spannungen erst ab einer bestimmten Querkraft begrenzt werden.

Dabei kann die Nut-und Federverbindung besonders einfach verwirklicht und montiert werden, wenn die Feder an der Adapterplatte angeordnet ist, und die Nut durch zwei sich zu der Nut in der Montagestellung ergänzende Absätze gebildet ist, wobei jeweils ein Absatz an einer der Halteplatten angeordnet ist. Die Halteplatten mit den Kugelhalbschalen können dadurch derart montiert werden, indem sie beidseitig an die Adapterplatte angesetzt und anschließend miteinander verbunden werden, wobei in einem Zwischenschritt die Kugel eingeführt wird. Nach dem Ansetzen ergänzen sich die beiden Absätze zu der Nut, wobei sie gleichzeitig die an der Adapterplatte vorgesehene Feder beidseitig umfassen.

Weiter wird vorgeschlagen, dass die beiden Halteplatten durch zwei an gegenüberliegenden Randseiten der Halteplatten, vorzugsweise an parallel zueinander verlaufenden Randseiten angeordnete Nut- und Federverbindungen an der Adapterplatte gehalten sind. Durch die vorgeschlagene Lösung können die Halteplatte bzw. die Adapterplatte vor dem abschließenden Befestigungsvorgang der beiden Halteplatten seitlich zur Justierung geringfügig verschoben werden, bevor sie abschließend befestigt werden. Ferner wird durch die vorgeschlagene Ausrichtung der Nut- und Federverbindung gleichzeitig die laterale Bewegungsrichtung der Adapterplatte senkrecht zu der Schiene vorgegeben.

Statt der Kugelgelenke kann alternativ auch ein Kopplungsstück als nicht Erfindungsgemäß verwendet werden, welches zwei Paare von fluchtend angeordneten Schwenkzapfen aufweist. Das Kopplungsstück ist dabei über eines der Paare der Schwenkzapfen mit einer der Adapterplatten und mit dem jeweils anderen Paar der Schwenkzapfen unmittelbar mit den Schienen oder mit einem gegenüber den Schienen fixierten Zwischenstück verbunden. Dabei können die Schwenkzapfen statt durch jeweils zwei Paare auch durch jeweils einen durchgehenden, einteiligen Schwenkzapfen gebildet sein.

Durch das Kopplungsstück ist die Adapterplatte in dem jeweiligen Lagerpunkt schwenkbar um die durch die Schwenkzapfen definierten Schwenkachsen gelagert, wodurch eine in den Eigenschaften zu den Eigenschaften der Kugelgelenke vergleichbare Lagerung verwirklicht werden kann. Dabei sind die Schwenkzapfen bevorzugt orthogonal zueinander ausgerichtet, so dass die dadurch definierten Schwenkachsen gleichfalls orthogonal zueinander ausgerichtet sind. Die Verwendung der Kugelgelenke hat jedoch den Vorteil, dass die Lagerungen in den Lagerpunkten erheblich flacher ausgebildet werden können, so dass entsprechend flache oder dünne Adapterplatten verwendet werden können, und eine entsprechend kleine Bauhöhe der gesamten Befestigungseinrichtung verwirklicht werden kann. Dabei haben die Kugelgelenke gegenüber der Verwendung des Kopplungsstückes mit den zwei Schwenkachsen zudem den Vorteil, dass die Kugeln in den Kugelhalbschalen innerhalb gewisser Grenzen frei verschwenkt und gedreht werden können, während sich die Bewegung der Adapterplatten bei Verwendung der Kopplungsstücke erst durch eine Kombination zweier Schwenkbewegungen um die beiden Schwenkachsen ergibt.

Damit ist sowohl aus Gründen der Bauhöhe als auch aus Gründen der zu schaffenden Beweglichkeiten die Verwendung von Kugelgelenken zu bevorzugen.

Das Kopplungsstück kann an seiner Unterseite zwei Freischnitte aufweisen, durch welche der der Schiene zugewandte Schwenkzapfen freigelegt ist. Ferner kann das Beschlagteil zwei hochstehende Dome mit jeweils einer nicht zu erkennenden Durchgangsöffnung aufweisen. Zur Montage des Kopplungsstückes wird dieses so an das Beschlagteil angesetzt, dass die Dome in die Freischnitte eingreifen und derart ausgerichtet sind, dass die Durchgangsöffnungen in den Domen mit entsprechenden Durchgangsöffnungen in dem Kopplungsstück fluchten. Anschließend wird der Schwenkzapfen durch die fluchtenden Öffnungen des Kopplungsstückes und die Öffnungen in den Domen eingeführt, wodurch das Kopplungsstück schwenkbar mit dem Beschlagteil und der Schiene verbunden ist. Der Schwenkzapfen ist orthogonal zu dem Schwenkzapfen ausgerichtet, so dass das auf dem Kopplungsstück gehaltene Bauteil nach Art einer kardanischen Lagerung schwenkbar um die Längsachsen der Schwenkzapfen gelagert ist. Die Erfindung wird im Folgenden anhand einer bevorzugten Ausführungsform unter Bezugnahme auf die beigefügten Figuren erläutert. Dabei zeigt
- Fig. 1:: eine Befestigungseinrichtung mit zwei Adapterplatten und zwei Schienen in Sicht von oben;
- Fig. 2:: eine Adapterplatte mit zwei Schienen;

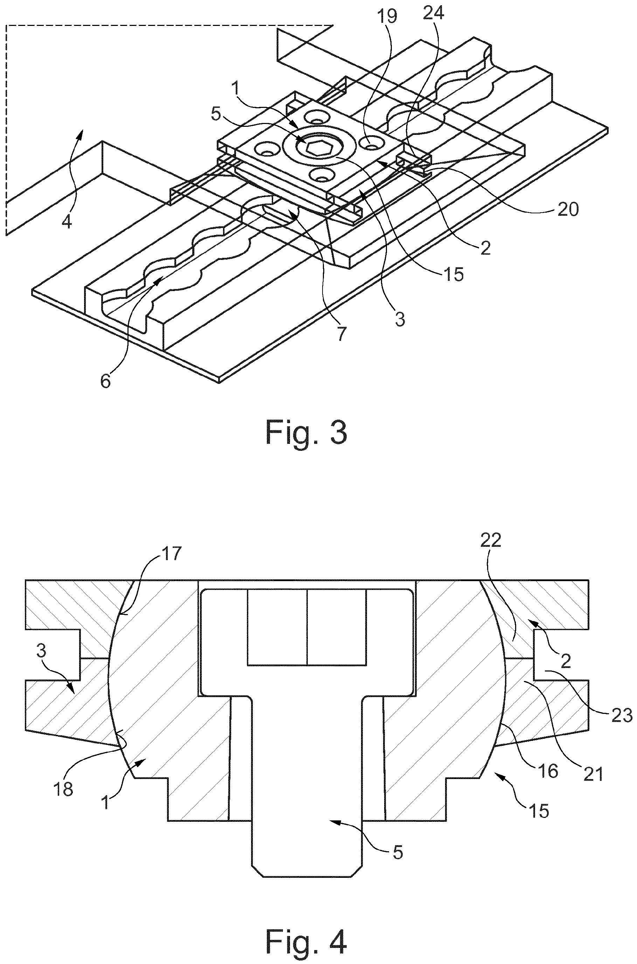

- Fig. 3:: einen vergrößerten Ausschnitt einer Adapterplatte mit einem Kugelgelenk;
- Fig. 4:: eine Schnittdarstellung eines Schnittes durch das Kugelgelenk; und
- Fig. 5:: ein alternatives Kopplungsstück mit zwei Schwenkzapfen, das nicht Teil der Erfindung ist ; und
- Fig. 6:: eine kardanische Lagerung mit dem Kopplungsstück aus der Figur 5.

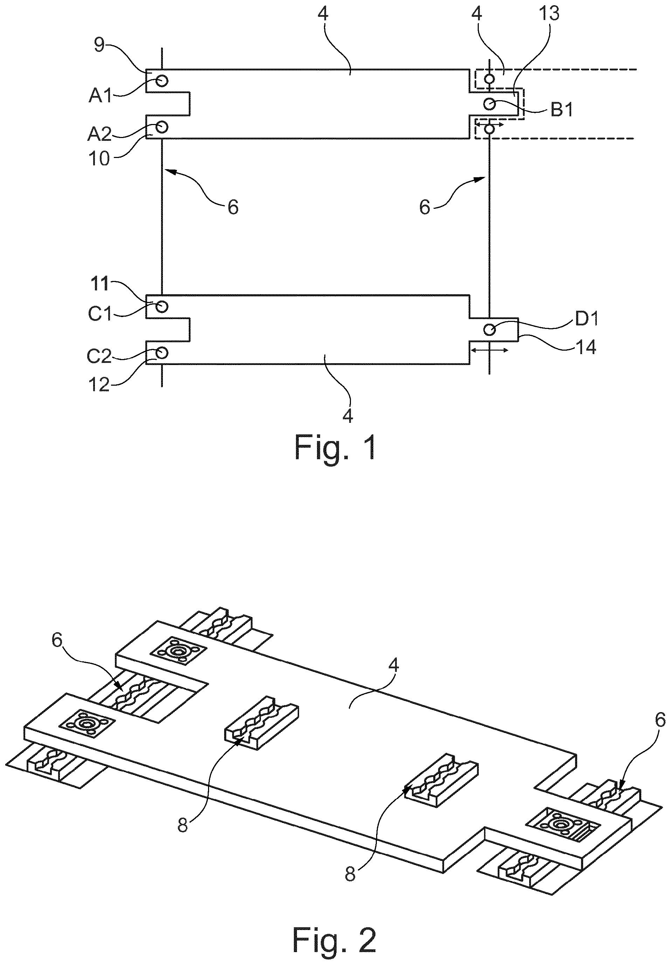

In der Fig. 1 ist eine erfindungsgemäße Befestigungseinrichtung mit zwei Adapterplatten 4 zu erkennen, welche in zwei parallel zueinander und in Längsrichtung eines Flugzeugrumpfes ausgerichteten Schienen 6 gehalten sind. Die Schienen 6 sind Teil eines in der Bodenstruktur des Flugzeugrumpfes in dem Flugzeuginnenraum angeordneten Schienensystems, in denen verschiedene nicht dargestellte Bauteile, wie z.B. Flugzeugsitze, Tische, Möbelstücke im Allgemeinen, Trennwände und dergleichen, befestigbar sind. Zur Befestigung eines Bauteils weist die Befestigungseinrichtung erfindungsgemäß zwei Adapterplatten 4 auf, welche in einem Abstand zueinander in den Schienen 6 gehalten sind. Sofern größere Bauteile in den Schienen 6 befestigt werden sollen, können selbstverständlich auch weitere Adapterplatten 4 vorgesehen werden, die auf denselben oder weiteren Schienen 6 des Schienensystems befestigt sind.

In der Fig. 2 ist eine vergrößerte Adapterplatte 4 in Schrägansicht zu erkennen. Die Schienen 6 sind jeweils als U-Profile mit einer Verriegelungskontur aus regelmäßig angeordneten Vorsprüngen ausgebildet, wobei die Vorsprünge derart geformt sind, dass sie die offenen Seiten der U-Profile zu regelmäßigen Kreisöffnungen mit einem mittigen Schlitz verengen. Die Adapterplatten 4 sind jeweils in einem ersten Lagerpunkt B1 und D1 in Bezug zu den in der Darstellung der Fig. 1 rechten Schienen 6 quer verschieblich gelagert. Ferner sind die Adapterplatten 4 in jeweils zwei zweiten Lagerpunkten A1, A2 und C1, C2 nicht verschieblich mit der benachbarten Schiene 6 verbunden, so dass jede der Adapterplatten 4 in einer kippsicheren Dreipunktlagerung mit zwei nicht verschieblichen Lagern und einem verschieblichen Lager gehalten sind. Da die Verschieblichkeit der ersten Lagerpunkte B1 und D1 quer zu der Schiene 6 gerichtet ist, wie auch in der Fig. 1 zu erkennen ist, können die beiden Schienen 6 eine Relativbewegung zueinander ausführen, ohne dass dabei Zwangskräfte in den Schienen 6, der Bodenstruktur, den Adapterplatten 4 oder auch in den daran befestigten Bauteilen erzeugt werden.

Auf den Adapterplatten 4 sind jeweils zwei kurze Befestigungsstücke 8 vorgesehen, welche durch verkürzte Stücke einer Schiene 6 mit einer identischen Verriegelungskontur gebildet sind. Das Bauteil wird nun statt in den Schienen 6 direkt mit daran angeordneten, nicht dargestellten Befestigungsansätzen in den Befestigungsstücken 8 der Adapterplatte 4 befestigt. Damit kann die Position und die Ausrichtung des Bauteils individuell durch die Position und die Ausrichtung der Befestigungsstücke 8 vorgegeben werden, und die Position und Ausrichtung der Befestigungsstücke 8 kann auch individuell an die Position und Ausrichtung der Befestigungsansätze des Bauteils angepasst werden. Die Adapterplatten 4 bilden praktisch eine konstruktive Schnittstelle zwischen den Bauteilen und den Schienen 6, welche eine individuelle Anordnung und Ausrichtung des Bauteils gegenüber den Schienen 6 des Schienensystems ermöglicht. Da erfindungsgemäß zwei voneinander entkoppelte Adapterplatten 4 vorgesehen sind, welche in einem Abstand in den Schienen 6 befestigt sind, können auch große Bauteile an der Bodenstruktur befestigt werden, ohne dass die Bodenstruktur dazu durch ein entsprechend groß zu dimensionierendes einziges Adapterteil 4 versteift werden müsste, wie dies bei der im Stand der Technik bekannten Lösung der Fall wäre. Vielmehr können durch die Verwendung identischer Adapterteile 4 und die individuelle Anordnung, insbesondere durch eine individuelle Wahl des Abstandes der beiden Adapterteile 4, verschieden große Bauteile unter Verwendung identischer Adapterteile 4 auf den Schienen 6 befestigt werden.

Die Adapterteile 4 selbst sind in den ersten und zweiten Lagerpunkten A1, A2, B1, C1, C2 und D1 jeweils durch Kugelgelenke 15 mit den Schienen 6 verbunden. Die Kugelgelenke 15 umfassen jeweils eine Kugel 1, welche mittels einer Befestigungsschraube 5 mit einem in den Schienen 6 verriegelten Beschlagteil 7 verbunden sind. An den Adapterplatten 4 sind ferner in jedem der Lagerpunkte A1, A2, B1, B2, C1, C2 und D1 jeweils zwei Halteplatten 2 und 3 mit jeweils vier Befestigungsansätzen 19 in Form von Bohrungen mit und ohne Innengewinde vorgesehen, über die die Halteplatten 2 und 3 mittels geeigneter Befestigungsschrauben miteinander verbunden sind. Die Halteplatten 2 und 3 weisen jeweils eine Kugelhalbschale 17 und 18 auf, welche derart geformt und angeordnet sind, dass sie sich in der aneinander befestigten Stellung der Halteplatten 2 und 3 zu einer Kugelschale 16 ergänzen, welche in der Zusammensetzung eine Negativform der Kugel 1 aufweist. Dabei sind die Kugelhalbschalen 17 und 18 jeweils so geformt, dass sich ihre Weiten ausgehend von den in der zusammengesetzten Stellung einander zugewandten Öffnungsquerschnitten in die Halteplatten 2 und 3 hinein ausschließlich verkleinern. Die Kugelhalbschalen 17 und 18 sind ferner maximal so groß, dass sie die Hälfte der Kugel 1 abdecken. Dadurch kann die Kugel 1 in eine der Kugelhalbschalen 17 oder 18 eingesetzt und die jeweils andere Kugelhalbschale 17 oder 18 anschließend aufgesetzt werden, ohne dass dazu eines der Teile verformt werden muss. Damit können die Teile so steif und fest ausgebildet werden, wie dies für die Lagerung notwendig ist, ohne dass dazu auf die Montage Rücksicht genommen werden muss.

Ferner weisen die Halteplatten 2 und 3 an zwei ihrer seitlich gegenüberliegenden Seitenflächen zurückspringende Absätze 21 und 22 auf, welche sich in der zusammengesetzten Stellung der Halteplatten 2 und 3 jeweils zu einer Nut 23 ergänzen. An den Adapterplatten 4 sind ferner im Bereich der ersten Lagerpunkte B1 und D1 rechteckförmige Aussparungen 24 vorgesehen, welche an ihren gegenüberliegenden Seitenflächen jeweils eine in die Aussparung 24 hinein vorspringende Feder 20 aufweist, die sich parallel zu den Seitenrändern der Aussparungen 24 erstrecken. Die Feder 20 weist eine Dicke und eine Höhe auf, welche so bemessen sind, dass die Halteplatten 2 und 3 die Feder 20 in der zusammengesetzten Stellung mit der Nut 23 mit einem geringen Spiel umfassen, wodurch eine Verschieblichkeit der Halteplatten 2 und 3 parallel zu der Feder 20 ermöglicht wird. Die Aussparung 24 ist in der Länge in Richtung der Feder 20 länger als die Länge der Halteplatten 2 und 3 in diese Richtung bemessen, so dass die Adapterplatte 4 Bewegungen in Richtung der Feder 20 ausführen kann. Die Nut- 23 und Federverbindung 20 ist dabei derart ausgerichtet, dass sich die Adapterplatte 4 gegenüber den ersten Lagerpunkten B1 und D1 quer, und bevorzugt senkrecht zu der Schiene 6 bewegen kann, wie auch anhand der Pfeile in der Fig. 1 zu erkennen ist.

Die Aussparungen 24 der zweiten Lagerpunkte A1, A2, C1 und C2 sind dagegen so bemessen, dass die Halteplatten 2 und 3 darin unverschieblich gehalten sind, und die Adapterplatten 4 infolgedessen in den zweiten Lagerpunkten A1, A2, C1 und C2 keine Quer- oder Längsbewegungen zu der Schiene 6 ausführen können. Die Verbindungen der Adapterplatten 4 ist aber auch in den zweiten Lagerpunkten A1, A2, C1 und C2 durch Kugelgelenke 15 verwirklicht, welche einen identischen Aufbau wie die Kugelgelenke 15 in den ersten Lagerpunkten B1 und D1 aufweisen. Dadurch können die Schienen 6 auch in den zweiten Lagerpunkten A1, A2, C1 und C2 geringfügige Schwenkbewegungen um ihre Längsachsen ausführen, ohne dass dadurch Zwangskräfte in den zweiten Lagerpunkten A1, A2, C1, und C2, in den Schienen 6 selbst, in den Adapterplatten 4 und schließlich auch in den daran zu befestigenden Bauteilen erzeugt werden.

Zur Montage der Befestigungseinrichtung werden zunächst die Beschlagteile 7 in die Schienen 6 eingeführt. Anschließend werden die Kugeln 1 mit den Befestigungsschrauben 5 in die Kugelhalbschalen 18 der unteren Halteplatte 3 eingeführt und in den Beschlagteilen 7 verschraubt. In einem nächsten Schritt wird die Adapterplatte 4 aufgelegt, und zwar in einer derartigen Ausrichtung, dass sie mit der Aussparung 24 auf der Halteplatte 3 zu liegen kommt bzw. dass die Halteplatte 3 in die Aussparung 24 von unten eintaucht. In einem letzten Schritt wird die obere Halteplatte 2 von oben so aufgesetzt, dass sie mit den Öffnungen der Befestigungsansätze 19 zu den Öffnungen der Befestigungsansätze 19 der unteren Halteplatte fluchten und die Kugelhalbschale 17 die Kugel 1 von oben abdeckt. Schließlich wird der Verbund der beiden Halteplatten durch Verschrauben geeigneter Befestigungsschrauben in den Befestigungsansätzen 19 miteinander verbunden. Damit ist die Adapterplatte 4 in dem Lagerpunkt über die miteinander verbundenen Halteplatten 2 und 3 und die in der Kugelschale 16 gelagerte Kugel und das Beschlagteil 7 mit der Schiene 6 verbunden, wobei durch die Kugel 1 die vorteilhafte Schwenkbeweglichkeit erzielt wird.

Damit ist das Bauteil nach der vollständigen Befestigung auf zwei Adapterplatten 4 gehalten, welche jeweils für sich in verschieblichen ersten Lagerpunkten B1, D1 und in zwei nicht verschieblichen oder auch festen zweiten Lagerpunkten A1, A2, C1, C2 gehalten sind. Die Adapterplatten 4 sind in jedem der Lagerpunkte A1, A2, B1, C1, C2 und D1 aufgrund der dort vorgesehenen Kugelgelenke 15 zusätzlich innerhalb gewisser Winkel gegenüber den Schienen 6 und um gekehrt verschwenkbar. Ferner sind die Adapterplatten 4 voneinander entkoppelt, d.h. es besteht außer über die Schienen 6 und das darauf befestigte Bauteil keine direkt Verbindung, welche die Bodenstruktur versteifen würde.

Insgesamt werden durch die vorgeschlagene Befestigung der Adapterplatten 4 jeweils relative Querbewegungen der Schienen 6 und Schwenkbewegungen der Schienen 6, hervorgerufen durch Deformationen der Bodenstruktur des Flugzeuges, kompensiert, und die Bodenstruktur wird bewusst nicht versteift, was entsprechende Vorteile für die darauf zu befestigenden Bauteile und die Insassen hat. Ferner werden Deformationen der Bodenstruktur nur begrenzt oder im Idealfall nicht auf die Adapterplatte, das Bauteil und den Insassen übertragen. Jedenfalls kann die Übertragung der Deformationen und die gegenseitige Erzeugung von Zwangskräften durch die vorgeschlagene Befestigungseinrichtung erheblich reduziert werden, wodurch die Einhaltung der luftfahrtrechtlichen Anforderungen vereinfacht werden kann.

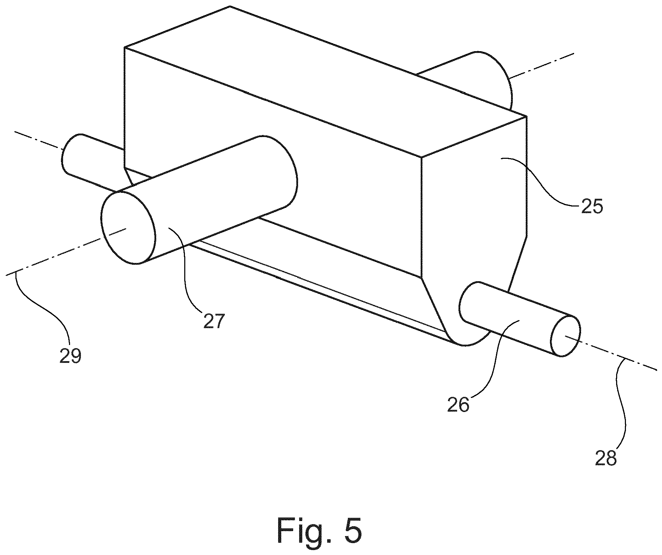

In der Fig. 5 ist ein statt der Kugelgelenke 15 alternativ verwendbares Kopplungsstück 25 als nicht Teil der Erfindung zu erkennen, welches zwei Paare von fluchtend angeordneten Schwenkzapfen 26 und 27 aufweist. Das Kopplungsstück 25 ist dabei über eines der Paare der Schwenkzapfen 26 oder 27 mit einer der Adapterplatten 4 und mit dem jeweils anderen Paar der Schwenkzapfen 26 oder 27 unmittelbar mit den Schienen 6 oder mit einem gegenüber den Schienen 6 fixierten Zwischenstück verbunden. Dabei können die Schwenkzapfen 26 und 27 statt durch jeweils zwei Paare auch durch jeweils einen durchgehenden, einteiligen Schwenkzapfen 26 und 27 gebildet sein. Durch das Kopplungsstück 25 ist die Adapterplatte 4 in dem jeweiligen Lagerpunkt A1, A2, B1, C1, C2 oder D1 schwenkbar um die durch die Schwenkzapfen 26 und 27 definierten Schwenkachsen 28 und 29 gelagert, wodurch eine in den Eigenschaften zu den Eigenschaften der Kugelgelenke 15 vergleichbare Lagerung verwirklicht werden kann. Dabei sind die Schwenkzapfen 26 und 27 bevorzugt orthogonal zueinander ausgerichtet, so dass die dadurch definierten Schwenkachsen 28 und 29 gleichfalls orthogonal zueinander ausgerichtet sind. Die Verwendung der Kugelgelenke 15 hat jedoch den Vorteil, dass die Lagerungen in den Lagerpunkten A1, A2, B1, C1, C2 und D1 erheblich flacher ausgebildet werden können, so dass entsprechend flache oder dünne Adapterplatten 4 verwendet werden können, und eine entsprechend kleine Bauhöhe der gesamten Befestigungseinrichtung verwirklicht werden kann. Dabei haben die Kugelgelenke 15 gegenüber der Verwendung des Kopplungsstückes 25 mit den zwei Schwenkachsen 28 und 29 zudem den Vorteil, dass die Kugeln 1 in den Kugelhalbschalen 17 und 18 innerhalb gewisser Grenzen frei verschwenkt und gedreht werden können, während sich die Bewegung der Adapterplatten 4 bei Verwendung der Kopplungsstücke 25 erst durch eine Kombination zweier Schwenkbewegungen um die beiden Schwenkachsen 28 und 29 ergibt.

Damit ist sowohl aus Gründen der Bauhöhe als auch aus Gründen der zu schaffenden Beweglichkeiten die Verwendung von Kugelgelenken 15 zu bevorzugen.

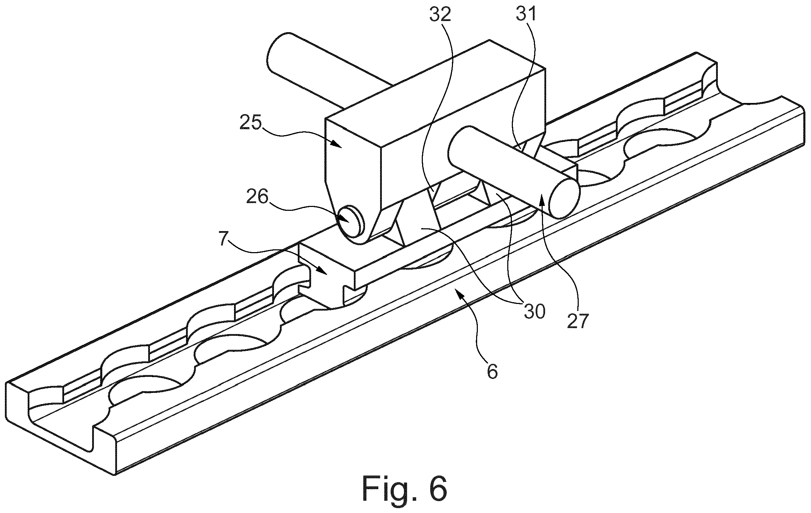

In der Figur 6 ist die Befestigung des Kopplungsstückes 25 aus der Figur 5 in einer Schiene 6 mittels eines Beschlagteils 7 zu erkennen. Das Kopplungsstück 25 weist an seiner Unterseite zwei Freischnitte 31 und 32 auf, durch welche der der Schiene 6 zugewandte Schwenkzapfen 26 freigelegt ist. Ferner weist das Beschlagteil 7 zwei hochstehende Dome 30 mit jeweils einer nicht zu erkennenden Durchgangsöffnung auf. Zur Montage des Kopplungsstückes 25 wird dieses so an das Beschlagteil 7 angesetzt, dass die Dome 30 in die Freischnitte 31 und 32 eingreifen und derart ausgerichtet sind, dass die Durchgangsöffnungen in den Domen 30 mit entsprechenden Durchgangsöffnungen in dem Kopplungsstück 25 fluchten. Anschließend wird der Schwenkzapfen 26 durch die fluchtenden Öffnungen des Kopplungsstückes 25 und die Öffnungen in den Domen 30 eingeführt, wodurch das Kopplungsstück 25 schwenkbar mit dem Beschlagteil 7 und der Schiene 6 verbunden ist. Der Schwenkzapfen 27 ist orthogonal zu dem Schwenkzapfen 26 ausgerichtet, so dass das auf dem Kopplungsstück 25 gehaltene Bauteil nach Art einer kardanischen Lagerung schwenkbar um die Längsachsen der Schwenkzapfen 26 und 27 gelagert ist.

## Patentansprüche

1. Befestigungseinrichtung für ein in Schienen (6) einer Bodenstruktur eines Flugzeuginnenraumes befestigbares Bauteil, wobei
- wenigstens zwei voneinander entkoppelte, in den Schienen (6) befestigbare Adapterplatten (4) vorgesehen sind, auf denen das Bauteil mit voneinander beabstandeten Befestigungsansätzen befestigbar ist, wobei
- jede der Adapterplatten (4) an zwei verschiedenen Schienen (6) befestigbar ist, wobei
- die Adapterplatten (4) jeweils an einer der Schienen (6) in jeweils einem ersten Lagerpunkt (B1, D1) und in der anderen Schiene (6) in zwei zweiten Lagerpunkten (A1, A2, C1, C2) bei der Montage gelagert sind, so dass wenn montiert,
- jede der Adapterplatten (4) in drei Lagerpunkten in den Schienen gehalten ist, und
- die Adapterplatten (4) in den ersten Lagerpunkten (B1, D1) verschiebbar in den Schienen (6) gelagert sind, wobei
- in der Verbindung zwischen den Adapterteilen (4) und den Schienen (6), Kugelgelenke (15) vorgesehen sind, und
- die Kugelgelenke (15) jeweils durch eine formstabile Kugel (1) und eine formstabile Kugelschale (16) gebildet sind, wobei
- die formstabile Kugelschale (16) jeweils durch zwei formstabile Kugelhalbschalen (17, 18) gebildet ist, wobei
- die Kugeln (1) der Kugelgelenke (15) den Schienen (6) und die Kugelschalen (16) den Adapterplatten (4) zugeordnet sind, wobei
- die beiden Kugelhalbschalen (17, 18) eines Kugelgelenkes (15) jeweils an einer Halteplatte (2, 3) angeordnet sind, welche sich in einer zusammengesetzten Montagestellung zu der Kugelschale (16) ergänzen und wenigstens einen Befestigungsansatz (19) aufweisen, und
- die beiden Halteplatten (2, 3) in der zusammengesetzten Montagestellung durch eine Nut- (23) und Federverbindung (20) mit jeweils einer Adapterplatte (4) verbunden sind, wobei im Gebrauch,
- die Nut- (23) und Federverbindung (20) quer, vorzugsweise senkrecht, zu den Schienen (6) ausgerichtet ist, an denen die jeweilige Adapterplatte (4) befestigt ist.

2. Befestigungseinrichtung nach einem der vorangegangenen Ansprüche, **dadurch gekennzeichnet, dass**
- wenigstens eine der Seitenflächen der Adapterplatten (4) derart konturiert ist, dass wenigstens zwei zur Befestigung unterschiedlicher Bauteile vorgesehene Adapterplatten (4) zueinander angrenzend auf einer gemeinsamen Schiene (6) angeordnet werden können.

3. Befestigungseinrichtung nach Anspruch 2, **dadurch gekennzeichnet, dass**
- die Seitenfläche einer der beiden Adapterplatten (4) die Negativfläche der gegenüberliegenden Seitenfläche der jeweils angrenzend angeordneten Adapterplatte (4) ist, und
- die beiden Adapterplatten (4) mit den gegenüberliegenden Seitenflächen ineinander greifen.

4. Befestigungseinrichtung nach einem der Ansprüche 1 bis 3, **dadurch gekennzeichnet, dass**
- die zwei zweiten Lagerpunkte (A1, A2, C1, C2) einer ersten Adapterplatte (4) auf fingerförmigen, beabstandeten Fortsätzen (9, 10, 11, 12) angeordnet sind, und
- eine jeweils zweite Adapterplatte (4) einen auf einem einzelnen fingerförmigen Fortsatz (13, 14) angeordneten ersten Lagerpunkt (B1, D1) aufweist, wobei
- der erste Lagerpunkt (B1, D1) auf dem einzelnen fingerförmigen Fortsatz (13, 14) zwischen den Fortsätzen (9, 10, 11, 12) der zweiten Lagerpunkten (A1, A2, C1, C2) der ersten Adapterplatte (4) in derselben Schiene (6) gehalten ist.

5. Befestigungseinrichtung nach einem der vorangegangenen Ansprüche, **dadurch gekennzeichnet, dass**
- die Feder (20) an der Adapterplatte angeordnet ist, und
- die Nut (23) durch zwei sich zu der Nut (23) in der Montagestellung ergänzende Absätze (21, 22) gebildet ist, wobei
- jeweils ein Absatz (21, 22) an einer der Halteplatten (2, 3) angeordnet ist.

6. Befestigungseinrichtung nach einem vorangegangenen Ansprüche, **dadurch gekennzeichnet, dass**
- die beiden Halteplatten (2, 3) durch zwei an gegenüberliegenden Randseiten der Halteplatten (2, 3), vorzugsweise parallel zueinander verlaufenden Randseiten, angeordnete Nut- (23) und Federverbindungen (20) an der Adapterplatte (4) gehalten sind.

## Claims

1. Securing device for a component that can be secured on rails (6) of a floor structure of an aircraft interior, wherein
- at least two adapter plates (4) are provided which are decoupled from one another and can be secured on the rails (6), on which plates the component having mutually spaced securing attachments can be secured, wherein
- each of the adapter plates (4) can be secured on two different rails (6),
- each adapter plate (4) being mounted on one of the rails (6) at a first mounting point (B1, D1) and on the other rail (6) at two second mounting points (A1, A2, C1, C2) during installation, so that
- the adapter plates (4) are held in place on the rails at three mounting points when installed, and
- the adapter plates (4) are mounted on the rails (6) so as to be slidable at the first mounting points (B1, D1), wherein
- ball-and-socket joints (15) are in each connection between the adapter parts (4) and the rails (6), and
- each ball-and-socket joint (15) is formed by a dimensionally stable ball (1) and a dimensionally stable ball socket (16), wherein
- each dimensionally stable ball socket (16) being formed by two dimensionally stable ball socket halves (17, 18), wherein
- the balls (1) of the ball-and-socket joints (15) are associated with the rails (6) and the ball sockets (16) are associated with the adapter plates (4), wherein
- the two ball socket halves (17, 18) of a ball-and-socket joint (15) are respectively arranged on a support plate (2, 3) and, in an assembled position, the two halves complement each other to form the ball socket (16) and comprise at least one securing attachment (19), and
- the two support plates (2, 3) in the assembled position are each connected by means of a tongue (20) and groove (23) joint to an adapter plate (4) when assembled, wherein
- the tongue (20) and groove (23) joint being oriented transversely, preferably perpendicularly, to the rails (6) to which the relevant adapter plate (4) is secured.

2. Securing device according to any of the preceding claims, **characterised in that**
- at least one of the side faces of the adapter plates (4) is contoured in such a way that at least two adapter plates (4) provided for securing different components can be arranged so as to be adjacent to one another on a common rail (6).

3. Securing device according to claim 2, **characterised in that**
- the side face of one of the two adapter plates (4) is the negative face of the opposite side face of the adapter plate (4) arranged adjacent thereto in each case, and
- the two adapter plates (4) mutually engage with the opposite side faces.

4. Securing device according to one the claims 1 to 3, **characterised in that**
- the two second mounting points (A1, A2, C1, C2) of a first adapter plate (4) are arranged on finger-shaped spaced apart projections (9, 10, 11, 12), and
- a second adapter plate (4) in each case comprises a first mounting point (B1, D1) arranged on an individual finger-shaped projection (13, 14),
- the first mounting point (B1, D1) being supported on the same rail (6) on the individual finger-shaped projection (13, 14) between the projections (9, 10, 11, 12) of the second mounting points (A1, A2, C1, C2) of the first adapter plate (4).

5. Securing device according to any of the preceding claims, **characterised in that**
- the tongue (20) is arranged on the adapter plate, and
- the groove (23) is formed by two shoulders (21, 22) that complement each other in the assembled position to form the groove (23),
- each shoulder (21, 22) being arranged on one of the support plates (2, 3).

6. Securing device according to any of the preceding claims, **characterised in that**
- the two support plates (2, 3) are supported on the adapter plate (4) by means of two tongue (20) and groove (23) joints that are arranged on opposite lateral sides of the support plates (2, 3), preferably lateral sides that extend in parallel with one another.

## Revendications

1. Dispositif de fixation pour un élément pouvant être fixé dans des rails (6) d'une structure de plancher d'un intérieur d'avion, dans lequel
- il est prévu au moins deux plaques d'adaptation (4) désaccouplées l'une de l'autre et pouvant être fixées dans les rails (6), sur lesquelles l'élément peut être fixé avec des saillies de fixation espacées l'une de l'autre, dans lequel
- chacune des plaques d'adaptation (4) peut être fixée à deux rails (6) différents, dans lequel
- les plaques d'adaptation (4) sont montées chacune sur l'un des rails (6) en un premier point d'appui (B1, D1) et sur l'autre rail (6) en deux deuxièmes points d'appui (A1, A2, C1, C2) lors du montage, de sorte qu'une fois montées
- chacune des plaques d'adaptation (4) est maintenue en trois points d'appui dans les rails, et
- les plaques d'adaptation (4) sont montées de manière coulissante dans les rails (6) au niveau des premiers points d'appui (B1, D1), dans lequel
- des articulations à rotule (15) sont prévus à la liaison entre les pièces d'adaptation (4) et les rails (6), et
- les articulations à rotule (15) sont formées chacune d'une rotule (1) de forme stable et d'une cuvette de rotule (16) de forme stable, dans lequel
- la cuvette de rotule (16) de forme stable est formée de deux demi-cuvettes de rotule (17, 18) de forme stable, dans lequel
- les rotules (1) des articulations à rotule (15) sont associées aux rails (6) et les cuvettes de rotule (16) aux plaques d'adaptation (4), dans lequel
- les deux demi-cuvettes de rotule (17, 18) d'une articulation à rotule (15) sont disposées chacune sur une plaque de retenue (2, 3) qui, dans une position de montage assemblée, se complètent pour former la cuvette de rotule (16) et présentent au moins une saillie de fixation (19), et
- les deux plaques de retenue (2, 3) sont reliées, dans la position de montage assemblée, par un assemblage à rainure (23) et languette (20) à une plaque d'adaptation (4) respective, dans lequel, en cours d'utilisation,
- l'assemblage à rainure (23) et languette (20) est orienté transversalement, de préférence perpendiculairement, aux rails (6) auxquels la plaque d'adaptation (4) respective est fixée.

2. Dispositif de fixation selon l'une des revendications précédentes, **caractérisé en ce que**
- au moins une des surfaces latérales des plaques d'adaptation (4) est profilée de telle sorte qu'au moins deux plaques d'adaptation (4) prévues pour la fixation d'éléments différents peuvent être disposées de manière adjacente sur un rail commun (6).

3. Dispositif de fixation selon la revendication 2, **caractérisé en ce que**
- la surface latérale d'une des deux plaques d'adaptation (4) est la surface négative de la surface latérale opposée de la plaque d'adaptation (4) adjacente respective, et
- les deux plaques d'adaptation (4) s'imbriquent par leurs surfaces latérales opposées.

4. Dispositif de fixation selon l'une des revendications 1 à 3, **caractérisé en ce que**
- les deux deuxièmes points d'appui (A1, A2, C1, C2) d'une première plaque d'adaptation (4) sont disposés sur des prolongements (9, 10, 11, 12) espacés en forme de doigt, et
- une deuxième plaque d'adaptation (4) respective présente un premier point d'appui (B1, D1) disposé sur un prolongement (13, 14) en forme de doigt unique, dans lequel
- le premier point d'appui (B1, D1) du prolongement (13, 14) en forme de doigt unique est maintenu entre les prolongements (9, 10, 11, 12) des deuxièmes points d'appui (A1, A2, C1, C2) de la première plaque d'adaptation (4) dans le même rail (6).

5. Dispositif de fixation selon l'une des revendications précédentes, **caractérisé en ce que**
- la languette (20) est disposée sur la plaque d'adaptation, et
- la rainure (23) est formée par deux talons (21, 22) qui se complètent pour former la rainure (23) dans la position de montage, dans lequel
- un talon (21, 22) est disposé sur chacune des plaques de retenue (2, 3).

6. Dispositif de fixation selon l'une des revendications précédentes, **caractérisé en ce que**
- les deux plaques de retenue (2, 3) sont maintenues sur la plaque d'adaptation (4) par deux assemblages à rainure (23) et languette (20) disposés sur des bords opposés des plaques de retenue (2, 3), de préférence des bords s'étendant parallèlement l'un à l'autre.
